(19) Europäisches Patentamt
European Patent Office
Office européen des brevets

(11)  **EP 3 680 178 B1**

(12)  **EUROPEAN PATENT SPECIFICATION**

(45) Date of publication and mention
of the grant of the patent:
**07.06.2023 Bulletin 2023/23**

(21) Application number: **19382021.4**

(22) Date of filing: **14.01.2019**

(51) International Patent Classification (IPC):
**B64D 39/00** $^{(2006.01)}$     **B64D 39/02** $^{(2006.01)}$

(52) Cooperative Patent Classification (CPC):
**B64D 39/00; B64D 39/02**

(54) **AIR-TO-AIR REFUELING (AAR) HOSE TENSION CONTROL**

LUFTBETANKUNGSSCHLAUCHSPANNUNGSSTEUERUNG

COMMANDE DE TENSION DE TUYAU DE RAVITAILLEMENT AIR-AIR (AAR)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.07.2020 Bulletin 2020/29**

(73) Proprietor: **Airbus Defence and Space, S.A.U.
28906 Getafe - Madrid (ES)**

(72) Inventors:
• **ESPINOSA-SANCHEZ, Martin
28906 GETAFE (Madrid) (ES)**

• **VALDEOLMOS TRABA, Javier
28906 GETAFE (Madrid) (ES)**

(74) Representative: **Elzaburu S.L.P.
Edificio Torre de Cristal
Paseo de la Castellana 259 C, planta 28
28046 Madrid (ES)**

(56) References cited:
**EP-A1- 2 915 751      EP-A2- 2 289 800
US-A1- 2006 060 709**

## Description

The present invention refers to a method for performing hose tension control in an AAR operation. The hose tension control is based on a control law that avoid hose whipping and drogue sail-away during the contact phase between a receiver aircraft and a tanker aircraft in a refueling operation performed with a refueling system.

## Background of the invention

Current refueling systems comprise a hose and a drogue that consist of a drum for winding and unwinding the hose during the refueling operation. A coupling and a drogue are installed at the end of the hose. The coupling has the function of connecting with a receiver aircraft probe and includes a valve for the fuel system. The drogue has the function of generating the aerodynamic drag necessary to trail and stabilize the hose and to hold the coupling allowing that the receiver pushes forward on the coupling to connect with the tanker.

During this contact process and while both aircraft are in contact, the behavior of the hose depends on the torque applied by the drum. An excessive torque can lead to a false contact by not allowing the receiver to connect to the coupling and this could cause a drogue sail-away. By contrast, a reduced torque can lead to a hose whipping or a whipping effect over the receiver aircraft or the tanker aircraft.

On the other hand, the applied torque must be enough to accelerate the drum in case of a high closure rate of the receiver. The high closure rate is the approach speed of the receiver aircraft towards the tanker aircraft. Typically, accelerations between 4.5 - 6 m/s$^2$ may be required.

In legacy systems, when the aerodynamic drag is high enough to allow the application of a torque in the drum which ensures the requested accelerations, the system applies a constant torque. When the drag is too low to fix that torque, the system detects the contact by hose length changes and applies a constant torque peak during a short time, independently to the receiver closure rate, increasing the risk of hose whipping if the receiver closure rate is too high or the risk of failed contact ("drogue sail away") if the receiver closure rate is too low.

Therefore, a method performed by refueling system in an AAR system that is capable of minimize the risk of hose whipping (if the receiver closure rate is too high) and fail contact (if the receiver closure rate is too low) is desired.

EP2915751A1 relates to a hose&drogue in-flight refueling method and system with a comprehensive control of the motion of the hose&drogue device. US2006060709A1 relates to an in-flight refueling system, sensor system and method are provided for detecting and damping changes in the disposition of an elongate hose extending from a tanker aircraft during an in-flight refueling operation.

EP2289800A2 relates to a method, apparatus and system are provided for facilitating aerial refueling by controlling a refueling drogue. In this regard, a respective error for at least one state associated with a hose or a drogue is provided, along with an indication of a current state of the drogue.

## Description of the invention

The present invention proposes a hose tension control law to avoid whipping under a low drag/airspeed condition, in situations wherein the proper torque T for the contact between the receiver aircraft and the tank aircraft is not enough to accelerate the winding drum up to 4,5 - 6 m/s$^2$.

Hence, a main aspect of the present invention, proposes a method according to claim 1.

The AAR operation is performed with a refueling system comprising a hose and drogue device for delivering fuel from a tanker aircraft to a receiver aircraft. The refueling system is extendable and retractable from and to the tanker aircraft by a winding drum device. Furthermore, the receiver aircraft comprises a probe which is extendable and retractable from and to the receiver aircraft for receiving fuel. The hose and drogue device includes a hose, a reception coupling unit at the end of the hose and a drogue attached to the reception coupling unit.

The method comprises measuring continuously a hose tension R applied at an end of the hose resultant from forces applied to the drogue (drag and receiver aircraft reactions) and from a tension applied to the hose by the drum device. In some examples, the hose tension R can be measured by measuring the current of a motor of the AAR system that actuates the drum, or by measuring an output of a load cell of the drum or by measuring an output of a piezoelectric sensing unit located at the end of the hose and drogue device. In some other examples, the hose tension R can be obtained with tables based on the acceleration of the drum.

A torque $T_0$ is applied to the drum device during a stand-by phase of the refueling system based on a predetermined stand-by hose tension $R_0$ that permits a contact of the receiver aircraft, wherein in the stand-by phase the tanker aircraft is waiting for the receiver aircraft.

The $T_0$ is fixed for every airspeed and should be lower than the theoretical drag D of the drogue to keep a stand-by hose tension $R_0$ that eases the contact of the receiver aircraft. The delta between $T_0$ and D is covered by a no-back device preventing the hose extension during a stand-by phase.

The system acceleration A is monitored, for instance with rotary sensors in the drum. In some examples, the acceleration A of the drogue obtained with the torque $T_0$ applied to the drum device is measured with a triaxial accelerometer inside the drogue for measuring its acceleration.

During the contact phase, the system controls the relationship between torque T applied and the system acceleration A, and the known system inertia. For an applied torque, high acceleration A of the drum means low tension R and therefore a whipping risk may happen. At this condition, the system may increase the torque at the drum motors. For an applied torque, low acceleration A of the drum means high tension R and therefore the drogue may seal away. At this condition, the system may reduce the torque at the drum motors. The proposed method modifies the torque applied to the drum to obtain a desired hose tension $R_c$ applied at the end of the hose during the contact phase in real time, by measuring the drum acceleration. The desired hose tension $R_c$ is achieved by obtaining a momentum M applied to the drum.

**Brief description of the drawings**

For a better understanding the above explanation and for the sole purpose of providing an example, some non-limiting drawings are included that schematically depict a practical embodiment.

Figure 1A shows a tanker aircraft and a receiver aircraft performing an AAR operation refueling system.
Figure 1B shows parts of a refueling system for performing an AAR operation according to the present invention.
Figure 2A shows the refueling system according to the present invention in a stand-by phase.
Figure 2B shows the refueling system according to the present invention in a contact phase.
Figures 3 and 4 show a first and a second graphics that relate to magnitudes used in the proposed method for controlling hose tension in an AAR operation according to the present invention.

**Description of a preferred embodiment**

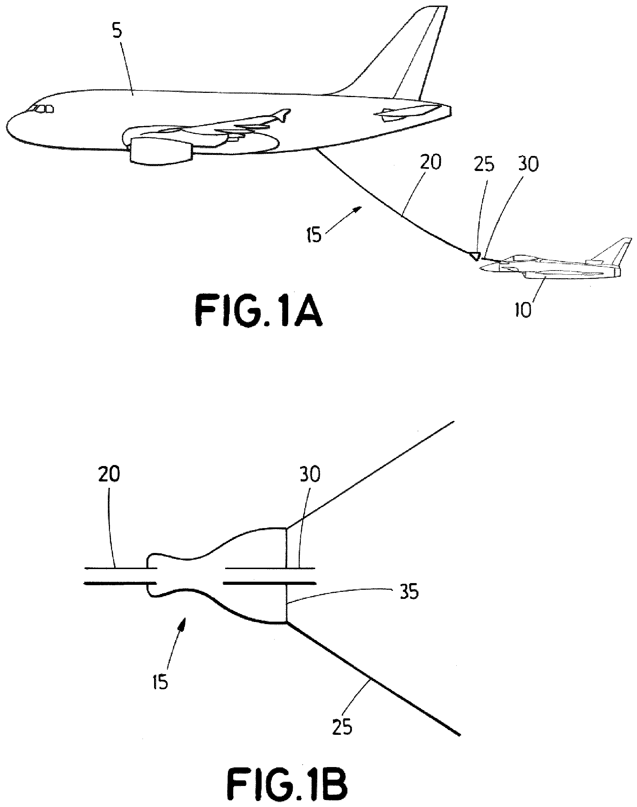

Figure 1 shows FIG. 1 is a schematic view of a refueling operation between a tanker aircraft (5) and a receiver aircraft (10) using a hose and drogue device. A known system for performing in-flight refueling operations, illustrated in FIGS. 1 to 3, is based on a refueling system (15) allowing fuel to pass from a tanker aircraft (5) to a receiver aircraft (10). The refueling system (15) comprises a hose and drogue device in the tanker aircraft (5) and a probe (30) in the receiver aircraft (10).

Figure 1B shows the refueling system (15). The hose and drogue device comprises a flexible hose (20) that trails from a refueling unit located in the tanker aircraft (5), a reception coupling unit (35) at the end of the hose (20) which has a passage for receiving the nozzle of the probe (30) of the receiver aircraft (10) and a drogue (25) which is a fitting resembling a windsock or shuttlecock that is used to stabilize the hose (20) trailing from the tanker aircraft (5) and to provide the drag to maintain the hose (20) catenary and the mating force with the probe (30).

The probe (30) is a rigid arm placed on the receiver aircrafts nose or fuselage with a valve that is closed until it mates with the reception coupling unit (35) and is opened to allow fuel to pass from the tanker aircraft (5) to the receiver aircraft (10).

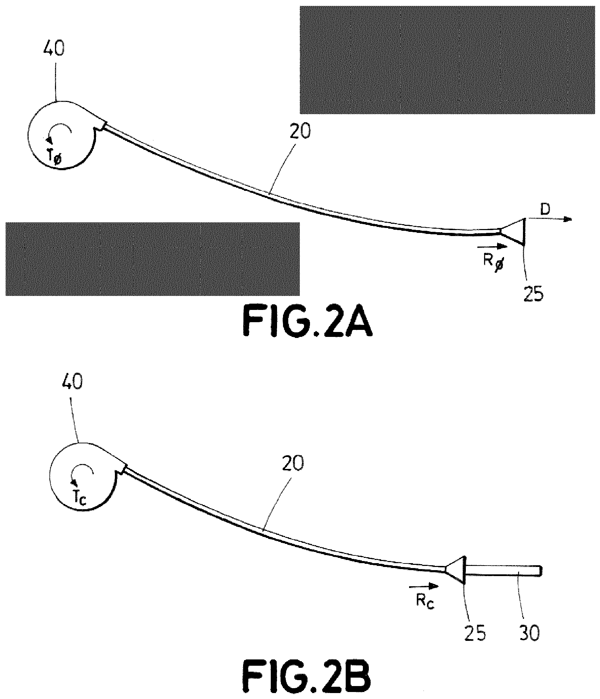

The fuel is pumped out from a fuel tank to the hose (20) by means of a fuel pump. A control unit (not shown in the figures) is operatively connected with the fuel pump and a drum device (40) shown in figures 2A and 2B manages the extension and retraction of the hose and drogue device (20, 25) and the supply of fuel to the hose (20).

The motion of the hose and drogue device (20, 25) during an in-flight refueling operation is subject to many forces that can vary throughout the in-flight refueling process. An improper tension control of the hose and drogue device (20, 25) in response to such forces can create significant risks for the receiver aircraft (10) and may cause missed contacts between the drogue and receiver aircraft (10). For example, the hose and drogue device (20, 25) may break due to improper hose tension control and the forces applied to the refueling system (15).

Figure 2A shows a stand-by phase of the refueling operation. When extending the hose (20), the drogue (25) is released into the airstream and the drag D extends the hose (20). A control unit (not shown in the figure) established in the tanker aircraft (5) is in charge of maintaining a constant extension speed of the hose (20) by controlling the drum device (40).

Once the hose and drogue device (20, 25) is fully extended, a constant torque $T_0$ is applied to the drum device (40), which is lower than the theoretical drag D of the drogue (25). The torque difference $T_d$ e.g. 82 kg (180lbs) is covered the no-back device. The stand-by hose tension $R_0$ is established by the drag D of the drogue (25) as shown in figure 2A.

Hence, the torque $T_0$ value is established by each type of drogue (25) and the flight speed which determines the flight envelope in which the hose and drogue device (20, 25) can work.

Changes in the drag performances of the drogue (25) or any increase of friction in the system due to life in service operation, might modify the $T_d$. If $T_d$ reaches a value that is not suitable for the refueling operation, it may cause a hazardous condition. For example, if $T_d$ is too low, the hose extension may end-up in a hose auto-rewind condition or a drogue sail-away. If $T_d$ is too high, the hose (20) becomes too loose and has too much slack. Both situations are to be avoided in order to achieve proper contact between the drogue and the probe (30).

Figure 2B shows a contact phase of the refueling operation that performs the control hose method according to the present invention. Once the drogue (25) is flying in the airstream, the receiver aircraft (10) has to maneuver to make the contact between the probe (30) and the drogue (25). In certain flight conditions such as turbulence, the drogue (25) might be unstable which makes it difficult for the pilot of the receiver aircraft (10) to contact with the drogue (25).

If the drogue (25) and the probe (30) do not connect, there is a missed contact which may be due to drogue instability. A missed contact creates a risk of damage to the receiver aircraft (10) and the hose and drogue device (20, 25).

When the probe (30) of the receiver aircraft (10) makes contact with the hose and drogue device (20, 25), the drag D is suddenly absorbed by the receiver aircraft (10). As the receiver aircraft (10) continuous to move forward, it continues pushing the hose and drogue device (20, 25). That displacement reduces the hose tension (from stand-by hose tension $R_0$ to contact phase hose tension $R_c$) creating a rotational movement to the winding drum device (40) by the torque applied to the drum $T_0$, which is detected by the control unit. After the detection of the contact the control unit commands the application of a contact phase torque $T_C$ to the drum device (40) for rewinding the hose and drogue device (20, 25) in response to the hose tension $R_c$.

Once the receiver aircraft (10) makes contact, the sudden hose tension variation in the hose (20) (from stand-by hose tension $R_0$ to contact phase hose tension $R_c$) can be detected. In some examples, this contact can be detected by a piezoelectric load cell of a sensing unit located at the end of the hose and drogue device (20, 25) and the information is sent to the control unit.

With the proposed method, the control unit can continuously calculate and applythe proper contact phase torque $T_C$ to the drum device (40) to achieve a desirable hose tension $R_c$. Commanding in this manner the contact phase torque $T_c$ of the drum, the device (40) generates a more suitable response than commanding a torque peak depending on the hose position and limits the risk of false contacts.

The calculations behind commanding the proper contact phase torque Tc are explained below:
When the AAR system is in a stand-by phase as in figure 2A and the tanker aircraft (5) is waiting for the receiver aircraft (10), there is a torque $T_0$ for a stand-by phase applied to the drum (40) intended to produce a quick response of the system to rewind the hose (20) when the receiver aircraft (10) pushes the drogue (25) forward. This quick response of the system by actuating the drum (40) avoids the hose whipping.

The proper contact phase torque Tc to make a safe contact depends on the aerodynamic drag D of the drogue (25). When the drag D is sufficiently high, the proper contact phase torque Tc for these conditions is accordingly high and capable of providing an acceleration of 4,5 - 6 m/s$^2$ of the hose, when the receiver pushes forward, so no action by the system is required at the time of contact.

When the drag goes down, the proper contact phase torque Tc must be lower to ensure that the remaining drag D is enough to allow a positive contact by the receiver aircraft (10) and may not be able to provide such acceleration (4,5 - 6 m/s$^2$), so a high closure rate of the receiver aircraft (10) i.e. the approach speed of the receiver can lead to a hose whipping.

During a contact phase, i.e. when the contact is detected between the receiver aircraft (10) and the tank aircraft (5) after the stand-by phase, it is possible to apply a torque peak to the winding drum (40) than in a stand-by phase and for a short period of time. However this can cause problems if the contact between the receiver aircraft (10) and the tank aircraft (5) is not detected on time or if the closure rate of the receiver aircraft (10) is not excessively high.

Hence, the main aspect of the present invention relates to a control law for controlling the hose tension in which the torque applied by the drum (40) is function of its angular acceleration. This technique is based on the application of the angular momentum equation to the drum (40) by applying the following control law of Equation 1:

$$\text{Equation 1: } M = I \cdot \alpha$$

Where:

M = Momentum applied to the drum.
I = Moment of inertia.
$\alpha$ = Angular acceleration of the drum.

We can consider a constant moment of inertia if we neglect the variation due to the change of hose length during the contact. Therefore the angular acceleration gives us the momentum applies to the drum (40). As the momentum is the result of the torque applied by the electric motor of the drum (40), which is known, and the hose tension generated by the aerodynamic drag, we can estimate the contact phase hose tension $R_c$ through the angular acceleration $\alpha$.

When a receiver aircraft (10) tries to connect with the coupling, the torque applied by the drum (40) is constant, i.e. $T_0$. If the angular acceleration is increased due to a reduction of hose tension/aerodynamic drag (i.e. the receiver aircraft (10 is pushing), an attempt of contact of the receiver aircraft (10) can be detected.

If the angular acceleration, caused by the receiver aircraft (10), is close to the maximum available for the applied contact phase torque $T_c$, it can be determined that there is danger of whipping (the system, with such a torque, would not able to rewind hose as quick as demanded by the receiver approach). In this condition the contact phase torque $T_C$ can be increased to accelerate the drum (40), tightening the hose and avoiding the whipping.

On the other hand, if the contact phase hose tension $R_c$ is increased, the angular acceleration is reduced away from the maximum available for the applied contact phase torque $T_c$ (which means that the receiver aircraft (10) is not pushing so quick and therefore the refueling system may be rewinding the hose too fast), and the contact phase torque $T_c$ can be decreased to avoid a false contact and a drogue sail-away.

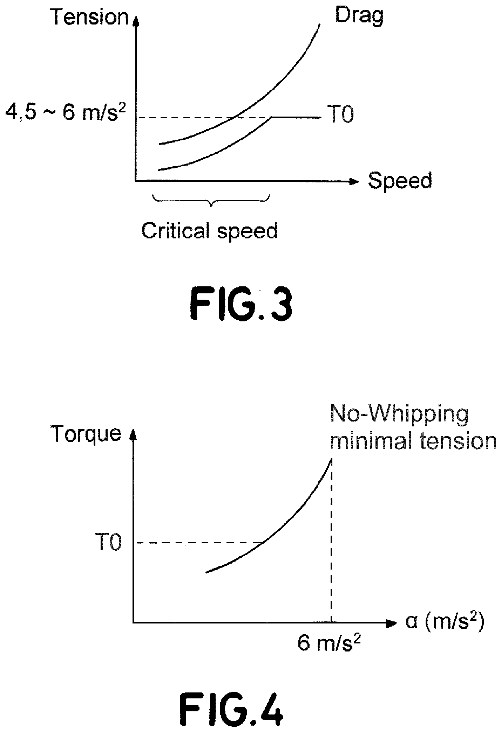

To apply this control law, it is required to determinate the maximum angular acceleration of the system as a function of the applied torque. The curve of figure 3 is obtained with a reduced hose tension "Tension" applied to the system (but without reaching a whipping condition). This is the limit of acceleration of the system for each applied contact phase torque $T_c$, i.e. 4,5 - 6m/s$^2$ when the applied torque is $T_0$. This limit would be reached in the case of a very fast contact.

The contact phase torque $T_c$ applied to the drum device (40) will be the proper one to ensure that the system angular acceleration is below or match the maximum acceleration obtained in the previous curve. The proper contact phase torque $T_c$ "Torque" is shown in figure 4.

In summary, the present control law used in the proposed method for hose and drogue devices establishes a torque $T_c$ in the AAR system based on a mapping of the motor torque as a function of rewinding angular speed and angular acceleration. The torque at every single condition will be selected to ensure that there is margin to accelerate higher without increasing the hose tension beyond a limit.

## Claims

1. A method for controlling a hose tension in an air-to-air refueling (AAR) operation from a tanker aircraft (5) to a receiver aircraft (10), the AAR operation performed with a refueling device system (15) which comprises a hose and drogue device for delivering fuel, extendable and retractable from and to the tanker aircraft (5) by a drum device (40), and a probe (30) on the receiver aircraft (10), extendable and retractable from and to the receiver aircraft (10) for receiving fuel, wherein the hose and drogue device includes a hose (20), a reception coupling unit (35) at the end of the hose (20) and a drogue (25) attached to the reception coupling unit (35), the method comprises:

during a stand-by phase wherein the tanker aircraft (5) waits for the receiver aircraft (10):

applying a torque $T_0$ to the drum device (40) of the refueling system based on a predetermined stand-by hose tension Ro that permits a contact of the drogue (25) and the receiver aircraft (10); and
measuring an acceleration A of the drogue (25),

during a contact phase between the drogue (25) and the receiver aircraft (10), the drum device (40) having a torque Tc and an angular acceleration $\alpha$, the method comprises the step of modifying the torque Tc applied to the drum device (40) to obtain a desired hose tension Rc applied at the end of the hose (20) by measuring the drum device (40) angular acceleration $\alpha$:

if the acceleration A does not avoid a whipping effect of the hose and drogue device, increasing $\alpha$ by increasing the torque Tc to obtain a desired hose tension $R_{c1}$ that avoids whipping,
if the acceleration A does not avoid a false contact of the hose and drogue device, reducing $\alpha$ by reducing the torque Tc to obtain a desired hose tension Rc2 that avoids a drogue sail-away,

wherein the desired hose tensions Rc1 and Rc2 are based on a momentum M applied to the drum device (40) according to:

$$M = I * \alpha$$

wherein I is the moment of inertia.

2. The method of claim 1, further comprising: measuring continuously a hose tension R applied at an end of the hose (20) resultant from forces applied to the drogue (aerodynamic drag and receiver aircraft reactions) and from a tension applied to the hose (20) by the drum device (40); and obtaining the predetermined stand-by hose tension Ro based on the measured hose tension R.

3. The method of claim 2, wherein measuring continuously the hose tension R at an end of the hose (20) comprises one of the following:

measuring the current of a motor comprised in the refueling device system (15) that actuates the drum device (40);
measuring an output of a load cell of the drum device (40);
measuring an output of a piezoelectric sensing unit located at the end of the hose and drogue device.

4. The method of claim 2, wherein measuring continuously the hose tension R at an end of the hose (20) comprises obtaining the hose tension R with tables based on a rotational acceleration of the drum device (40).

5. The method of claim 1, wherein measuring the acceleration A of the drogue (25) comprises measuring the acceleration A with a triaxial accelerometer inside the drogue (25) for measuring its acceleration.

## Patentansprüche

1. Verfahren zum Steuern einer Schlauchspannung bei einem Luft-Luft-Betankungsvorgang (AAR) von einem Tankflugzeug (5) zu einem Empfängerflugzeug (10), wobei der AAR-Vorgang mit einem Betankungsvorrichtungssystem (15) ausgeführt wird, das eine Schlauch- und Fangvorrichtung zum Zuführen von Kraftstoff umfasst und die durch eine Trommelvorrichtung (40) von und zu dem Tankflugzeug (5) ausfahrbar und einfahrbar ist, und eine Sonde (30) an dem Empfangsflugzeug (10) umfasst, die von und zu dem Empfangsflugzeug (10) ausfahrbar und einfahrbar ist, um Kraftstoff zu empfangen, wobei die Schlauch- und Fangvorrichtung einen Schlauch (20), eine Empfangskopplungseinheit (35) am Ende des Schlauchs (20) und eine Fangvorrichtung (25), die an der Empfangskopplungseinheit (35) angebracht ist, umfasst, wobei das Verfahren Folgendes umfasst:

Während einer Bereitschaftsphase, in der das Tankflugzeug (5) auf das Empfängerflugzeug (10) wartet:

Aufbringen eines Drehmoments T0 auf die Trommelvorrichtung (40) des Betankungssystems auf Grundlage einer vorbestimmten Bereitschaftsschlauchspannung Ro, die einen Kontakt der Fangvorrichtung (25) und des Empfängerflugzeugs (10) ermöglicht; und
Messen einer Beschleunigung A der Fangvorrichtung (25),

während einer Kontaktphase zwischen der Fangvorrichtung (25) und dem Empfängerflugzeug (10), wobei die Trommelvorrichtung (40) ein Drehmoment Tc und eine Winkelbeschleunigung a aufweist, umfasst das Verfahren den Schritt des Modifizierens des Drehmoments Tc, das auf die Trommelvorrichtung (40) aufgebracht wird, um eine gewünschte Schlauchspannung Rc zu erhalten, die am Ende des Schlauchs (20) aufgebracht wird, indem die Winkelbeschleunigung $\alpha$ der Trommelvorrichtung (40) gemessen wird:

Wenn die Beschleunigung A einen Peitscheneffekt des Schlauchs und der Schleppvorrichtung nicht vermeidet, Erhöhen von a durch Erhöhen des Drehmoments Tc, um eine gewünschte Schlauchspannung Rc1 zu erhalten, die ein Peitschen verhindert,
Wenn die Beschleunigung A einen falschen Kontakt des Schlauchs und der Fangvorrichtung nicht verhindert, Reduzieren von $\alpha$ durch Reduzieren des Drehmoments Tc, um eine gewünschte Schlauchspannung Rc2 zu erhalten, die ein Abdriften der Fangvorrichtung verhindert,

wobei die gewünschten Schlauchspannungen Rc1 und Rc2 auf einem Impuls M basieren, der auf die Trommelvorrichtung (40) ausgeübt wird, gemäß:

$$M = I * \alpha$$

wobei I das Trägheitsmoment ist.

2. Verfahren nach Anspruch 1, ferner umfassend: Kontinuierliches Messen einer Schlauchspannung R, die an einem Ende des Schlauchs (20) angelegt wird, die sich aus Kräften ergibt, die auf die Fangvorrichtung (aerodynamische Widerstands- und Empfängerflugzeugreaktionen) wirken, und aus einer Spannung, die durch die Trommelvorrichtung (40) auf den Schlauch (20) ausgeübt wird; und Erhalten der vorbestimmten Bereitschafts-Schlauchspannung Ro auf Grundlage der gemessenen Schlauchspannung R.

3. Verfahren nach Anspruch 2, wobei das kontinuierliche Messen der Schlauchspannung R an einem Ende des Schlauchs (20) eine der folgenden Messungen umfasst:

Messen des Stroms eines Motors, der in dem Betankungsvorrichtungssystem (15) enthalten ist, das die Trommelvorrichtung (40) betätigt;
Messen einer Ausgabe einer Kraftmessdose der Trommelvorrichtung (40);
Messen einer Ausgabe einer piezoelektrischen Erfassungseinheit, die sich am Ende der Schlauch- und Fangvorrichtung befindet.

4. Verfahren nach Anspruch 2, wobei das kontinuierliche Messen der Schlauchspannung R an einem Ende des Schlauchs (20) das Erhalten der Schlauchspannung R mit Tabellen auf Grundlage einer Drehbeschleunigung der Trommelvorrichtung (40) umfasst.

5. Verfahren nach Anspruch 1, wobei das Messen der Beschleunigung A der Fangvorrichtung (25) das Messen der Beschleunigung A mit einem dreiachsigen Beschleunigungsmesser innerhalb der Fangvorrichtung (25) zum Messen seiner Beschleunigung umfasst.

## Revendications

1. L'invention concerne un procédé de commande d'une tension de tuyau dans une opération de ravitaillement air-air (AAR) d'un avion-citerne (5) à un avion récepteur (10), l'opération AAR étant effectuée avec un système de dispositif de ravitaillement en carburant (15) qui comprend un dispositif de tuyau et de cannelure pour délivrer du carburant, extensible et rétractable depuis et vers l'avion-citerne (5) par un dispositif de tambour (40), et une sonde (30) sur l'avion récepteur (10), extensible et rétractable depuis et vers l'avion récepteur (10) pour recevoir du carburant, dans lequel le dispositif de tuyau et de cannelure comprend un tuyau (20), une unité de couplage de réception (35) à l'extrémité du tuyau (20) et une cannelure (25) fixée à l'unité de couplage de réception (35), le procédé comprenant :

   pendant une phase de veille dans laquelle l'avion-citerne (5) attend l'avion récepteur (10) :

   appliquer un couple T0 au dispositif de tambour (40) du système de ravitaillement en carburant sur la base d'une tension de tuyau d'attente prédéterminée Ro qui permet un contact de la roue libre (25) et de l'aéronef récepteur (10) ; et
   mesurer une accélération A de la denture (25),

   au cours d'une phase de contact entre la roue libre (25) et l'aéronef récepteur (10), le dispositif à tambour (40) ayant un couple Tc et une accélération angulaire a, le procédé comprend l'étape consistant à modifier le couple Tc appliqué au dispositif à tambour (40) pour obtenir une tension de tuyau souhaitée Rc appliquée à l'extrémité du tuyau (20) en mesurant l'accélération angulaire $\alpha$ du dispositif à tambour (40) :

   si l'accélération A n'évite pas un effet de fouet du tuyau et du dispositif de canalisation, augmenter a en augmentant le couple Tc pour obtenir une tension de tuyau souhaitée Rc1 qui évite le fouet,
   si l'accélération A n'évite pas un faux contact du tuyau et du dispositif de cannelure, réduire $\alpha$ en diminuant le couple Tc pour obtenir une tension de tuyau souhaitée Rc2 qui évite une fuite de cannelure,

   dans lequel les tensions de tuyau souhaitées Rc1 et Rc2 sont basées sur une impulsion M appliquée au dispositif de tambour (40) selon :

$$M = I * \alpha$$

où I est le moment de l'inertie.

2. Procédé selon la revendication 1, comprenant en outre :
   mesurer en continu une tension de tuyau R appliquée au niveau d'une extrémité du tuyau (20) résultant de forces appliquées à la drogue (réactions de traînée aérodynamique et d'avion récepteur) et d'une tension appliquée au tuyau (20) par le dispositif de tambour (40) ; et obtenir la tension de tuyau d'attente prédéterminée Ro sur la base de la tension de tuyau mesurée R.

3. Procédé selon la revendication 2, dans lequel la mesure continue de la tension de tuyau R à une extrémité du tuyau (20) comprend l'une des opérations suivantes :

   mesurer le courant d'un moteur compris dans le système de dispositif de ravitaillement (15) qui actionne le dispositif à tambour (40) ;
   mesurer une sortie d'une cellule de charge du dispositif à tambour (40) ;
   mesurer une sortie d'une unité de détection piézoélectrique située à l'extrémité du tuyau et du dispositif d'injection.

4. Procédé selon la revendication 2, dans lequel la mesure en continu de la tension de tuyau R à une extrémité du tuyau (20) comprend l'obtention de la tension de tuyau R avec des tables sur la base d'une accélération de rotation du dispositif de tambour (40).

5. Procédé selon la revendication 1, dans lequel la mesure de l'accélération A du bourrelet (25) comprend la mesure de l'accélération A avec un accéléromètre triaxial à l'intérieur du bourrelet (25) pour mesurer son accélération.

FIG.1A

FIG.1B

**FIG.2A**

**FIG.2B**

FIG.3

FIG.4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2915751 A1
- US 2006060709 A1

- EP 2289800 A2